# EUROPÄISCHE PATENTANMELDUNG

(11) **EP 4 815 343 A1**
(43) Veröffentlichungstag der Anmeldung: **30.09.2026**
(21) Anmeldenummer: 26165999.9
(22) Anmeldetag: 19.03.2026
(51) Int. Cl.: H04B 10/70, H04B 10/118

(54) **SYSTEM UND VERFAHREN ZUR ZEIT- UND POLARISATIONSSYNCHRONISIERUNG VON SIGNALEN ZUR QUANTENKOMMUNIKATION**

(30) Priorität: 24.03.2025 DE 102025111233
(71) Anmelder: OHB System AG, 28359 Bremen (DE)
(72) Erfinder: Hutterer, Martin, 86570 Inchenhofen (DE); Janusch, Janko, 86862 Schwabhausen (DE); Duarte, Vanessa, 46011 VALENCIA (ES); Kobel, Pascal, 82319 Starnberg (DE)
(74) Vertreter: Hoener, Matthias

(57) **Zusammenfassung**

Die Erfindung schafft ein System und ein Verfahren zur Zeit- und Polarisationssynchronisierung von optischen Signalen zur Quantenkommunikation, das besonders sicher, zuverlässig sowie effizient ist. Das wird dadurch erreicht, dass ein System zur gleichzeitigen Zeit- und Polarisationssynchronisierung von optischen Signalen zur Quantenkommunikation einer Sendeeinheit (10) und einer Empfängereinheit (11) aufweist. Die Sendeeinheit (10) weist zwei oder drei, vorzugsweise vier, Laser (15 - 18) auf, durch welche die polarisierten Synchronsignale (24) mit mindestens zwei unterschiedlichen Frequenzanteilen erzeugbar sind. Außerdem weist das System einen Transmitter (27) zum Senden der Synchronsignale (24) auf, wobei die einen Receiver (29) aufweisende Empfangseinheit (11) einen Polarisations-Manipulator (31) zur Polarisations-änderung der empfangenen Signale und mindestens drei Module, nämlich Modul 1 (34), Modul 2 (35) und Modul 3 (36), zur Messung einer Polarisation und einer Zeitbasis der empfangenen Synchronsignale (24) aufweist. Zusammen mit den Synchronsignalen (24) ist ein externes Informationssignal (22) von der Sendeeinheit (10) versendbar und von der Empfängereinheit (11) empfangbar.

## Beschreibung

Die vorliegende Erfindung betrifft ein System zur Zeitsynchronisierung und Polarisationssynchronisierung von optischen Signalen gemäß dem Anspruch 1. Des weiteren betrifft die Erfindung ein Verfahren zur Zeitsynchronisierung und Polarisationssynchronisierung von optischen Signalen gemäß Anspruch 9.

Die Synchronisierung von Uhren ist für das Funktionieren unserer heutigen, industrialisierten Welt unerlässlich. Sie stellt einen zentralen Baustein von Kommunikationsnetzwerken dar. Datenübertragung, Cloud-Computing und sichere Kommunikation wären ohne die Synchronisation von Uhren bzw. Zeit über das sogenannte *Network Time Protocol* (NTP) nicht möglich. Die bekanntesten Beispiele für die Notwendigkeit einer Zeitsynchronisierung stellen globale Navigationssysteme wie das Galileo Satellitensystem oder das *Global Positioning System* (GPS) dar, die einen großen Einfluss auf unser tägliches Leben haben. Ebenso unerlässlich ist die Synchronisation von Zeit für die Wissenschaft. Durch sie wurden bahnbrechende Ergebnisse wie der Nachweis von Gravitationswellen, von dem geplante wissenschaftliche Missionen wie LISA profitieren können, möglich.

Zurzeit werden aktuelle Forschungsergebnisse auf dem Gebiet der Quantenkommunikation auf die industrielle Anwendung übertragen, um eine neue Generation sicherer Kommunikationsinfrastrukturen aufzubauen.

Quantenkommunikationssysteme erfordern die Zeitsynchronisation absoluter Zeitstempel für die zeitliche Zuordnung von gesendeten und empfangenen Signalen bzw. Photonen zwischen einem Sender und einem Empfänger bzw. zwischen einem Satelliten und einer Bodenstation für die Freiraumverbindung. Ein Satellit, der sich in einer niedrigen Erdumlaufbahn (LEO) befindet, wird sich mit bis zu 7 km/s relativ zu einer Bodenstation bewegen. Aufgrund dieser schnellen Relativbewegung, die sich während des Überflugs dynamisch ändert, müssen relativistische Zeitverschiebungen und Dopplerverstimmungen berücksichtigt werden. Außerdem können Störungen in der Atmosphäre die optische Weglänge und damit die Zeit des Signals bzw. des bewegten Photonenpulses verändern. All diese Einflüsse erschweren die notwendige Synchronisierung extrem. Erschwerend kommt noch hinzu, dass für die oben genannte Technologie eine Synchronisationsgenauigkeit im Bereich von 10 ps, was 1/100.000.000.000 1 Sekunde entspricht, notwendig ist.

Darüber hinaus stellt die Qualität bzw. Information der Polarisation des übertragenen Signals bzw. der übertragenen Photonen in der optischen Verbindung eine herausragende Rolle für die Quantenkommunikation dar. Diese wird durch die relative geometrische Ausrichtung des Empfängers zum Sender bzw. des Satelliten zur Bodenstation und durch Doppelbrechungseffekte im Signalweg verändert. Diese Effekte müssen daher ebenfalls für eine sichere und effiziente Kommunikation berücksichtigt und am Empfänger korrigiert werden.

Davon ausgehend lag der vorliegenden Erfindung die Aufgabe zugrunde, ein System und ein Verfahren zur Zeit- und Polarisationssynchronisierung von optischen Signalen zur Quantenkommunikation zu schaffen, die besonders sicher, zuverlässig sowie effizient sind.

Eine Lösung dieser Aufgabe wird durch die Merkmale des Anspruchs 1 beschrieben. Demnach ist ein System zur gleichzeitigen Zeit- und Polarisationssynchronisierung von optischen Signalen, nämlich von Synchronsignalen und Informationssignalen, zur Quantenkommunikation einer Sendeeinheit und einer Empfängereinheit vorgesehen. Dabei bewegen sich die Sendeeinheit und die Empfangseinheit vorzugsweise mit einer sich ändernden relativen Geschwindigkeit zueinander. Die Sendeeinheit weist zwei oder drei, vorzugsweise vier, Laser auf, durch welche die polarisierten Synchronsignale, nämlich mindestens ein Zeitsynchronisationssignal und mindestens ein Polarisationssynchronisationssignal, mit mindestens zwei unterschiedlichen Frequenzanteilen erzeugbar sind. Außerdem weist das System einen Transmitter zum Senden der Synchronsignale auf, wobei die einen Receiver aufweisende Empfangseinheit einen Polarisations-Manipulator zur Polarisationsänderung der empfangenen Signale und mindestens drei Module, nämlich Modul 1, Modul 2 und Modul 3, zur Messung einer Polarisation und einer Zeitbasis der empfangenen Synchronsignale aufweist. Zusammen mit den Synchronsignalen ist ein externes Informationssignal von der Sendeeinheit versendbar und von der Empfängereinheit empfangbar. Durch dieses System wird eine besonders sichere, zuverlässige sowie effiziente Kommunikation zwischen dem Sender und dem Empfänger möglich. Durch die vorliegende Erfindung wird demnach ein System vorgeschlagen, dass die Polarisationssynchronisation und die Zeitsynchronisation mit absoluten Zeitstempeln in einem Aufbau miteinander kombiniert. Das vorgeschlagene System verwendet bis zu vier modulierte Laserdioden mit bis zu vier verschiedenen Polarisationen als Synchronisationssignalquelle.

Bevorzugt sieht es die Erfindung vor, dass die mindestens zwei Laser, bei denen es sich vorzugsweise um Laserdioden handelt, nämlich Laser 1 und Laser 2, mit einem durch ein internes oder externes Zeitsignal getakteten Frequenzgenerator FG1, insbesondere mit einem FPGA, verbunden sind, durch welchen die Laser mit einem insbesondere pseudozufälligen, spreizsequenz-modulierten und/oder amplitudenmodulierten Treiberstrom ansteuerbar sind, wobei die Laser insbesondere auf einem ersten photonischen integrierten Schaltkreis (PIC), vorzugsweise auf einem InP-PIC, angeordnet sind. Durch die Verwendung der InP-PIC-Technologie werden die Vorteile der Photonik mit der Reduzierung von Größe, Gewicht und Leistungsaufnahme mit den Vorteilen der integrierten Optik und der Miniaturisierung des Systems kombiniert, wodurch eine vollständige Systemintegration auf Chipebene (Millimeter-Bereich) möglich ist. Durch diese Dimensionierung ist das beanspruchte System besonders geeignet für die Weltraumanwendungen bzw. Satellitentechnologie. Es sei allerdings betont, dass das hier beanspruchte System als Mehrzwecksystem konzipiert ist und nicht notwendigerweise auf die Anwendung in der Quantenkommunikation beschränkt ist. Ebenso ist als Anwendung nicht nur die Kommunikation zwischen einem Satelliten und einer Bodenstation möglich. Das System ist vielmehr auch in der Lage, eine Kommunikation zwischen zweioder mehreren Satelliten herzustellen oder eine vollständig bodengebundene Verbindung zu synchronisieren. Darüber hinaus bietet das System auch die Möglichkeit, Zeit- und Polarisationssynchronisation von verschiedenen Quantum Key Distribution (QKD-)-Protokollen zu gewährleisten.

Insbesondere ist es denkbar, dass die Sendeeinheit zwei weitere Laser, vorzugsweise Laserdioden, nämlich Laser 3 und Laser 4, die gleichermaßen ansteuerbar sind wie Laser 1 und Laser 2, aufweist und die insbesondere auf einem zweiten photonischen integrierten Schaltkreis (PIC), vorzugsweise auf einem InP-PIC, angeordnet sind. Durch die Verwendung von zwei Lasern wird insbesondere die Kombination der Polarisations- und Zeitsynchronisation mit absoluten Zeitstempeln gleichzeitig in einem Aufbau möglich. Die Verwendung von drei, vier oder mehr Lasern bietet weitere Vorteile, wie beispielsweise eine Ausfallsicherheit und ein Nachweis von polarisationsabhängigen Verlusten. Dabei verwendet die Systemarchitektur vier modulierte Laserdioden bzw. Laser mit vier verschiedenen Polarisationen als Synchronisationsquellen. Die vier verschiedenen Polarisationsrichtungen ermöglichen es nicht nur, die Orientierung der empfangenen Polarisationszustände mit den gesendeten Polarisationszuständen zu synchronisieren, sondern auch die durch doppelbrechende Effekte verursachten polarisationsabhängigen Verluste zu kompensieren. Darüber hinaus ermöglicht die gleichzeitige Modulation eines Bitstroms auf den verschiedenen Polarisationskanälen die zeitliche Synchronisation von Sender und Empfänger.

Weiter ist es denkbar, dass den Lasern ein elektrooptischer Modulator (EOM) zur Amplitudenmodulation nachgeordnet ist, wobei der EOM durch das pseudo-zufällige, spreizsequenz-modulierte Signal ansteuerbar ist. Dazu ist es denkbar, dass dem System eine entsprechende Steuereinrichtung zugeordnet ist. Diese Steuereinheit kann ebenfalls in das System integriert sein oder dezentral ausgebildet sein.

Vorzugsweise ist es vorgesehen, dass den Lasern jeweils eine Halb- oder Viertelwellenplatte zugeordnet ist, so dass die durch die Laser erzeugten, polarisierten Synchronsignale verschiedenartig, nämlich vertikal, horizontal, diagonal, antidiagonal oder rechts oder links zirkular, polarasisierbar sind. Je nach Anforderung bzw. Systemarchitektur sind den verschiedenen Lasern verschiedene Wellenplatten zuordbar.

Außerdem ist es denkbar, dass den Lasern 1 und 2 ein Strahlenteiler BS1 und/oder den Lasern 3 und 4 ein Strahlenteiler BS2 zugeordnet ist, durch welchen die Signale der Laser 1 und 2 zum Synchronsignal 1 und die Signale der Laser 3 und 4 zum Synchronsignal 2 zusammenführbar sind und die Synchronsignale 1 und 2 durch einen weiteren Strahlenteiler BS3 zusammenführbar sind.

Darüber hinaus kann es vorgesehen sein, dass zwischen dem Strahlenteiler BS3 und dem Transmitter vorzugsweise ein weiterer Strahlenteiler BS4 angeordnet ist, durch den das Informationssignal mit den Synchronsignalen zusammenführbar sind.

Ein weiteres bevorzugtes Ausführungsbeispiel der Erfindung sieht es vor, dass dem Receiver der Empfangseinheit der Polarisations-Manipulator und vorzugsweise ein Signalseparator, vorzugsweise ein DWDM, durch welchen das Informationssignal von den Synchronsignalen trennbar sind, sowie die drei Module zur Messung einer Polarisation und einer Zeitbasis nachgeordnet sind.

Weiter ist es denkbar, dass das Modul 1 zur Messung einer A/D-Signalkomponente einen Strahlenteiler BS4 zur Auskopplung eines Signalanteils, eine Halbwellenplatte zur Rotation der A/D-Komponenten in die H/V-Polarisationsbasis und einen polarisierenden Strahlenteiler PBS1 zur Messung der horizontalen/vertikalen (H/V) Signalkomponenten aufweist.

Eine weitere Ausführungsform der Erfindung kann es vorsehen, dass das Modul 2 zur Messung einer R/L-Signalkomponente einen Strahlenteiler BS5 zur Auskopplung eines Signalanteils, eine Viertelwellenplatte zur Rotation der rechts-zirkular/links-zirkular (R/L)-Komponente in die horizontale/vertikale (H/V) Polarisationsbasis und einen PBS2 zur Messung der horizontalen und vertikalen Signalkomponenten aufweist.

Bevorzugt ist es vorgesehen, dass das Modul 3 zur Messung einer H/V-Signalkomponente einen polarisierenden Strahlenteiler PBS3 zur Messung der horizontalen/ vertikalen (H/V) Signalkomponente aufweist.

Ein besonders bevorzugtes weiteres Ausführungsbeispiel kann es vorsehen, dass den Strahlenteilern PBS1, PBS2 und PBS3 jeweils zwei Dioden, nämlich D1 und D2, D3 und D4, D5 und D6, zugeordnet sind, um die verschiedenen Basenanteile der A/D-Signale, R/L-Signale und H/V-Signale zu messen, wobei den Diodenpaaren jeweils ein Analog-Elektrischer-Schaltkreis, nämlich AES1, AES2 und AES3, zugeordnet ist, dem wiederum ein gemeinsamer Frequenzgenerator FQ2, insbesondere ein FPGA, zugeordnet ist.

Darüber hinaus ist es denkbar, dass der Frequenzgenerator FQ2 mit dem Polarisations-Modulator verbunden ist, wobei der Frequenzgenerator FQ2 aus den von AES1, AES2 und AES3 empfangenen Signalen, nämlich den A/D-Fehler-Signalen 52, R/L-Fehler-Signalen 52 und H/V-Fehler-Signalen 52, Control-Signale erzeugt, vorzusgweise A/D-Control-Signale, R/L-Control-Signale und H/V-Control-Signale, die an den Polarisations-Modulator zur Kompensation von Polarisationsänderungen übertragbar sind.

Schließlich besteht die Möglichkeit, dass dem Frequenzgenerator FQ2 ein Oszillator, vorzugsweise ein VCXO, vorgeschaltet ist, um mittels eines Signals eines Moduls eine Referenzfrequenz zu erzeugen.

Ein Verfahren zur Zeitsynchronisierung und Polarisationssynchronisierung von optischen Signalen zur Lösung der genannten Aufgabe wird durch die Maßnahmen des Anspruchs 9 beschrieben. Demnach ist ein Verfahren zur gleichzeitigen Zeit- und Polarisationssynchronisierung von optischen Signalen, nämlich von Synchronsignalen und Informationssignalen, zur Quantenkommunikation, insbesondere zur Verwendung des Systems gemäß Anspruch 1, vorgesehen. Dabei sind eine Sendeeinheit und eine Empfangseinheit vorgesehen, die sich vorzugsweise mit einer sich ändernden relativen Geschwindigkeit zueinander bewegen. Die Sendeeinheit weist mindestens zwei, drei, vorzugsweise vier, Laser auf, durch welche polarisierte Synchronsignale, nämlich mindestens ein Zeitsynchronisationssignal und mindestens ein Polarisationssynchronisationssignal, mit mindestens zwei unterschiedlichen Frequenzanteilen erzeugt werden. Außerdem ist mindestens ein Transmitter zum Senden der Synchronsignale vorgesehen, wobei die einen Receiver aufweisende Empfangseinheit einen Polarisations-Manipulator zur Polarisationsänderung der empfangenen Signale und mindestens drei Module, nämlich Modul 1, Modul 2 und Modul 3, zur Messung einer Polarisation und einer Zeitbasis der empfangenen Synchronsignale aufweist. Zusammen mit den Synchronsignalen wird ein externes Informationssignal von der Sendeeinheit verwendet und von der Empfängereinheit empfangen.

Bevorzugt ist es vorgesehen, dass die mindestens zwei Laser, nämlich Laser 1 und Laser 2, von einem durch ein internes oder externes Zeitsignal getakteten Frequenzgenerator FG1 mit einem pseudo-zufälligen, spreizsequenz-modulierten und/ oder anderweitig amplitudenmodulierten Treiberstrom angesteuert werden. Weiter ist es denkbar, dass die Sendeeinheit zwei weitere Laser, nämlich Laser 3 und Laser 4, aufweist, die gleichermaßen angesteuert werden wie Laser 1 und Laser 2.

Insbesondere ist es denkbar, dass den Lasern ein elektrooptischer Modulator (EOM) zur Amplitudenmodulation nachgeordnet ist, wobei der EOM durch das pseudo-zufällige, spreizsequenz-modulierte Signal angesteuert wird.

Ein besonders bevorzugtes Ausführungsbeispiel der Erfindung kann es vorsehen, dass den Lasern jeweils eine Halb- oder Viertelwellenplatte zugeordnet ist, so dass durch die Laser polarisierte Synchronsignale erzeugt werden, die verschiedenartig polarasisierbar sind, nämlich vertikal, horizontal, diagonal, antidiagonal oder links oder rechts zirkular.

Weiter ist es denkbar, dass den Lasern 1 und 2 ein Strahlenteiler BS1 und/oder den Lasern 3 und 4 ein Strahlenteiler BS2 zugeordnet ist, durch welche die Signale der Laser 1 und 2 zum Synchronsignal 1 und die Signale der Laser 3 und 4 zum Synchronsignal 2 zusammengeführt werden und die Synchronsignale 1 und 2 durch einen weiteren Strahlenteiler BS3 zusammengeführt werden.

Ein weiteres mögliches Ausführungsbeispiel der Erfindung kann es vorsehen, dass zwischen dem Strahlenteiler BS3 und dem Transmitter vorzugsweise ein weiterer Strahlenteiler BS4 angeordnet ist, durch den das Informationssignal mit den Synchronsignalen zusammengeführt wird.

Vorzugsweise ist es denkbar, dass das Informationssignal mit den Synchronsignalen von dem Receiver empfangen werden und durch den Polarisations-Manipulator und vorzugsweise einen Signalseparator sowie durch die drei Module zur Messung einer Polarisation und einer Zeitbasis geleitet werden.

Ein mögliches Ausführungsbeispiel kann es vorsehen, dass durch Modul 1 eine Rotation der (A/D)-Komponenten in die horizontal/vertikal (H/V)-Polarisationsbasis zur Messung der horizontalen und vertikalen Signalkomponenten erfolgt. Weiter ist es denkbar, dass durch Modul 2 eine Rotation der (R/L)-Komponenten in die horizontale/ vertikale (H/V)-Polarisationsbasis zur Messung der horizontalen und vertikalen Signalkomponenten erfolgt. Darüber hinaus ist es außerdem denkbar, dass durch Modul 3 eine horizontale/vertikale (H/V)-Polarisationsbasis aus den Synchronsignalen ausgekoppelt und gemessen wird.

Ein besonders vorteilhaftes Ausführungsbeispiel der Erfindung kann es vorsehen, dass aus den jeweiligen Basen A/D-Signale, R/L-Signale und H/V-Signale und vorzugsweise Control-Signale erzeugt werden, die jeweils einem Analog-Elektrischen-Schaltkreis, nämlich AES1, AES2 und AES3, zugeführt werden, die wiederum A/D-Fehler-Signale 52, R/L-Fehler-Signale 52 und H/V-Fehler-Signale 52 an einen gemeinsamen Frequenzgenerator FQ2 übertragen.

Darüber hinaus ist es denkbar, dass der Frequenzgenerator FQ2 mit dem Polarisations-Manipulator verbunden ist, wobei durch den Frequenzgenerator FQ2 A/D-Control-Signale, R/L-Control-Signale und H/V-Control-Signale erzeugt werden, die an den Polarisations-Manipulator zur Kompensation von Polarisationsänderungen der Synchronsignale und Informationssignale übertragen werden.

Insbesondere ist es vorgesehen, dass die A/D-Signale, R/L-Signale und/oder H/V-Signale demoduliert und in einer Korrelationsmessung mit einer Referenzfrequenz verglichen werden.

Schließlich ist es denkbar, dass mittels eines Fehlersignals 52 der Korrelationsmessung ein Oszillator, vorzugsweise ein VCXO, angesteuert wird, um eine Referenzfrequenz für den Frequenzgenerator FQ2 zu steuern.

Ein mögliches Ausführungsbeispiel der Erfindung ist in den Figuren wiedergegeben. Diese zeigen:
- Fig. 1: eine schematische Darstellung einer Sendeeinheit, und
- Fig. 2: eine schematische Darstellung der Empfängereinheit.

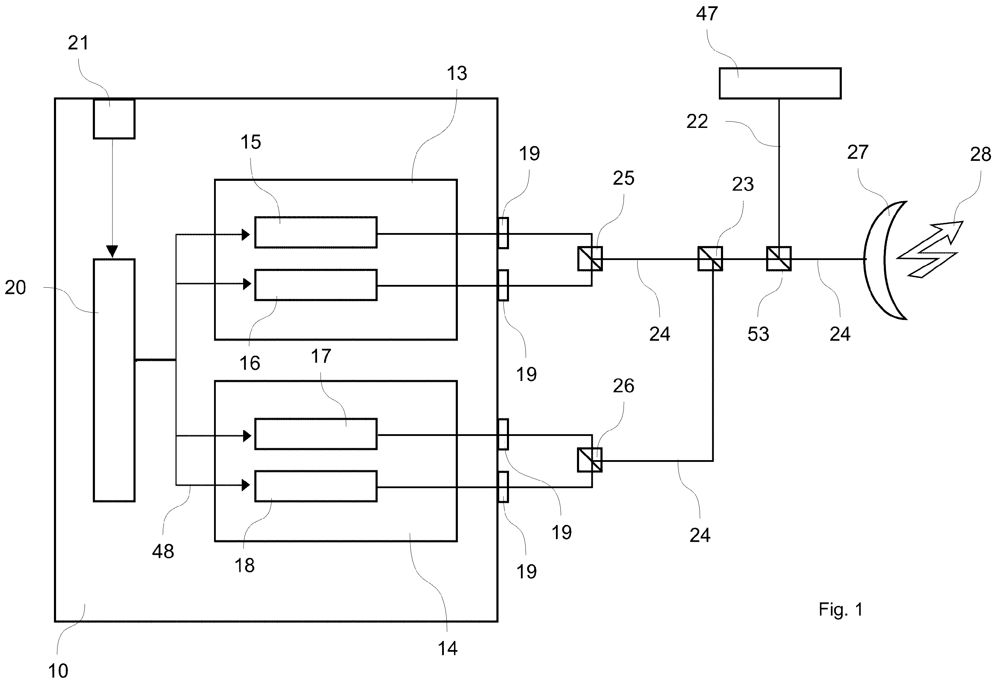

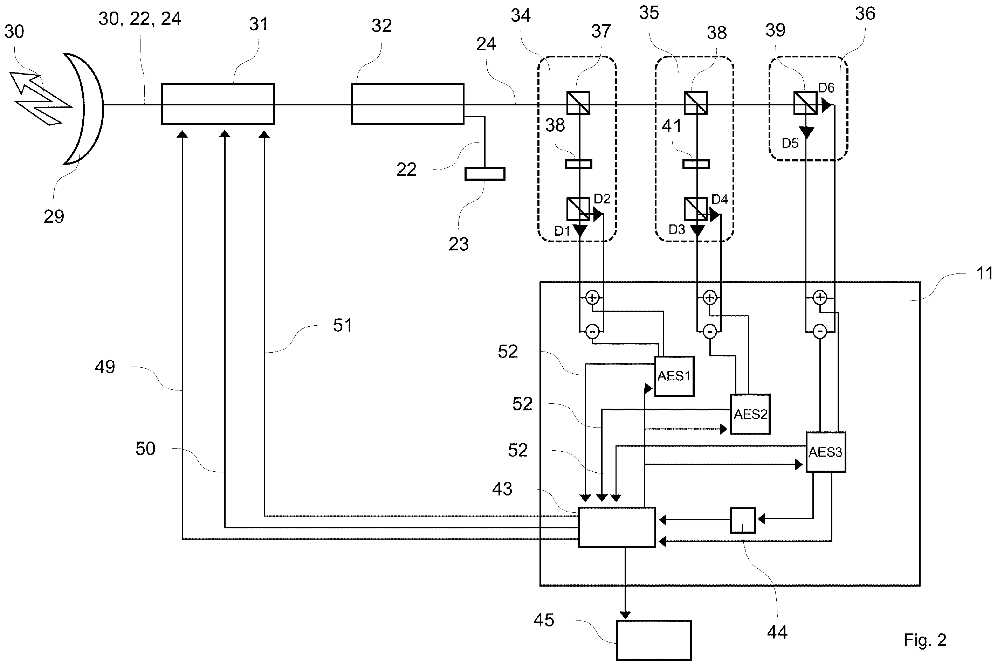

In den Fig. 1 und 2 ist ein mögliches Ausführungsbeispiel des Systems, bestehend aus einer Sendeeinheit 10 und einer Empfangseinheit 11, dargestellt. Es sei allerdings ausdrücklich darauf hingewiesen, dass neben diesem Beispiel eines möglichen Systems weitere Ausführungsformen denkbar und vorgesehen sind.

Die Sendeeinheit 10, die sich stationär in einer Bodenstation oder mobil in einem Flugobjekt befinden kann, besteht im Wesentlichen aus einer Leiterplatte 12 mit zwei PICs (*Photonic Integrated Circuits*) 13, 14. Jeder PIC 13, 14 weist zwei Laserquellen auf, nämlich der PIC 13 die Laser 1 15 und Laser 2 16 und der PIC 14 die Laser 3 17 und Laser 4 18. Es ist auch denkbar, dass die Leiterplatte 12 lediglich zwei oder drei Laser aufweist. Es hat sich allerdings gezeigt, dass die Verwendung von vier Lasern für die Qualität der Synchronisation sehr vorteilhaft ist. Die Laser 1 bis 4 bzw. 15 bis 18 weisen jeweils einen Bragg-Reflektor (DBR) auf. Dementsprechend liefert jeder PIC 13, 14 horizontal oder vertikal polarisiertes Licht, während eine weitere Polarisation über jeweils eine nachgeschaltete Halb- oder Viertelwellenplatte 19 erzeugt wird.

Die Ausgangssignale der Laser 1 bis 4 bzw. 15 bis 18 werden mithilfe einer Spreizsequenz moduliert. Dies geschieht durch direkte Modulation eines Treiberstroms 48 der Laser 1 bis 4 bzw. 15 bis 18 über die von einem FPGA (*Field Programmable Gate Array*) 20 erzeugte Spreizsequenz. Der FPGA 20 kann entweder durch einen internen Frequenzgenerator 21 oder durch eine externe Taktschnittstelle versorgt werden. Im Aufbau ist es möglich, die pseudozufälligen Spreizsequenzen entweder über verschiedene Frequenzen zu modulieren oder Sequenzen zu modulieren, die orthogonal zueinander sind.

Die von den Lasern 1 bis 4 bzw. 15 bis 18 erzeugten, modulierten Signale, nämlich die vier Synchronsignale 24, werden über zwei Strahlteiler 25, 26 zunächst zu zwei Signalen zusammengeführt und dann über einen weiteren Strahlteiler 23 zusammengeführt. Ein externes Signal (Informationssignal 22), zum Beispiel ein QKD-Signal, kann über eine Schnittstelle 47 und einen weiteren Strahlteiler 53 auf der Senderseite in das System eingespeist werden. In dem Strahlteiler 53 wird das Informationssignal 22 mit dem Synchronsignal 24 zusammengeführt bzw. überlagert und dem Sender bzw. Transmitter 27 als ausgehendes Signal 28 zur Übertragung an die Empfangseinheit 11 zugeführt.

Die Empfangseinheit 11 weist einen Empfänger bzw. Receiver 29 auf, mit dem das von der Sendeeinheit 10 gesendete, ausgehende Signal 28 als eingehendes Signal 30 empfangen wird. In der Empfangseinheit 11 durchläuft das Signal 30, welches sowohl das Synchronsignal 24 als auch das Informationssignal 22 enthält, einen Polarisations-Manipulator 31, der zur Manipulation der Polarisation des empfangenen Lichts bzw. Signals 30 bzw. des Synchronsignals 24 und des Informationssignals 22 dient. Ein nachgeschalteter DWDM (*Dense Wavlength Division Multiplexer*) 32 extrahiert das Informationssignal 22 von dem Synchronsignal 24 und stellt es nach erfolgter Manipulation in polarisationskorrigierter Form über eine Schnittstelle 33 für weitere geplante Anwendungen zur Verfügung.

Nach dem DWDM 32 folgen drei Module, nämlich das Modul 1 34, das Modul 2 35 und das Modul 3 36, die zur Messung der Polarisation und der Zeitbasis des empfangenen Synchronsignals 24 verwendet werden und als Rückmeldung für die Synchronisationseinheiten dienen. Ein Strahlteiler 37 koppelt im Modul 1 34 einen Teil des einfallenden Synchronsignals 24 aus. Hier wird jedes Licht mit einem Polarisationszustand (SOP) von A/D mit einer Halbwellenplatte 38 gedreht, um mit einem polarisierenden Strahlteiler 39 in der horizontalen/vertikalen (H/V)-Basis über Dioden D1 und D2 gemessen zu werden.

Ein Strahlteiler 40 des Moduls 2 35 ist für die Erfassung von zirkular polarisiertem Licht des Synchronsignals 24 vorgesehen. Analog zum Strahlteiler 37 wird das zirkulare Licht mit einer Viertelwellenplatte 41 gedreht, um in der H/V-Basis zu messen. Zur Messung der Basis kommt auch hier ein weiterer Strahlteiler 46 und Dioden D3 und D4 zum Einsatz.

Der Strahlteiler 42 des Moduls 3 36 wird zur Erfassung von einfallendem H/Vpolarisiertem Licht des Synchronsignals 24 verwendet. Zur Messung der Basis kommen Dioden D5 und D6 zum Einsatz.

Um gleichzeitig geometrische Effekte und polarisationsabhängige Verluste zu korrigieren, ist eine empfindliche Messung in mindestens drei Zuständen aus drei orthogonalen Basen erforderlich. Um die erforderliche Empfindlichkeit zu erreichen, ist es jedoch erforderlich, in einer um 45° zur transmittierten Basis gedrehten Basis zu messen - zum Beispiel müssen bei einer transmittierten H/V-Basis entweder Messungen in A/D oder R/L durchgeführt werden. Daher werden in dem hier beschriebenen Ausführungsbeispiel des Systems alle drei Basen ausgewertet, um unabhängig von der übertragenen Basis sensible Messergebnisse und damit ein präzises Fehlersignal 52 für jedes Rotationssegment der Poincaré-Kugel zu erhalten.

Da das Zeitsynchronisationssignal aus dem Vergleich der pseudozufälligen Spreizsequenzen extrahiert wird, ist eine Zeitsynchronisation mit allen gesendeten Basen möglich. Da - bedingt durch die genannten Einflüsse - die Intensität des einfallenden Lichts bzw. des eingehenden Signals 30 schwankt, muss auch die empfangene Gesamtleistung ermittelt werden. Neben der Differenz zwischen den detektierten Polarisationskomponenten wird auch die Summe berechnet. Auf diese Weise kann die relative Leistung der jeweiligen Polarisation bestimmt werden. Zur Kompensation der Polarisationsdrift werden die digitalisierten Fehlersignale 52 der jeweiligen Basen von dem FPGA 43 empfangen und in Steuersignale, nämlich Steuersignal H/V 49, Steuersignal L/R 50 und Steuersignal A/D 51, umgewandelt. Diese Steuersignal 49, 50, 51 dienen zur Ansteuerung des empfängerseitigen Polarisation-Manipulators 31 und zur Kompensation von Polarisationsänderungen bzw. Verdrehungen, die durch die Verbindungsstrecke oder die Relativbewegung verursacht werden.

Zum Messen der verschiedenen Basenanteile der A/D-Signale, R/L-Signale und H/V-Signale sind den Strahlenteilern 39, 46 und 42 und den entsprechenden Dioden D1 bis D6 drei Analog-Elektrischer-Schaltkreise, nämlich AES 1, AES 2 und AES 3, zugeordnet.

Die Signale werden wiederum über die AES 1, AES 2 und AES 3 einem FPGA 43 der Empfangseinheit 11 zugeführt.

Um die Zeitbasen zu synchronisieren, wird das analoge Signal aller Basen in dem FPGA 43 demoduliert und mit einer auf der Empfangseinheit 11 erzeugten Referenzfrequenz verglichen. Eine Korrelationsmessung erzeugt ein Fehlersignal 52, das zur Manipulation eines Frequenzgenerators 44 bzw. eines spannungsgesteuerten Quarzoszillationen (VCXO) verwendet wird, um die Referenzfrequenz des FPGAs 43 auf der Empfangseinheit 11 zu steuern. Dies stellt über die Steuersignale 49, 50 und 51 einen Regelkreis dar, der die Spreizsequenzen und damit die Zeitbasis der Sendeeinheit 10 und der Empfangseinheit 11 über einen Satellitenüberflug kontinuierlich anpasst. In diesem Zustand befindet sich der Regelkreis im "*Lock*"*.* Dadurch können *Timing-Jitter* und Doppler-Verschiebungen, die durch die relativistischen Geschwindigkeiten zwischen dem Satelliten und Bodenstation verursacht werden, im erforderlichen Picosekundenbereich kompensiert werden.

Durch die Invertierung der gesendeten Spreizsequenzen und Bildung des Korrelationssignals mit der von der Empfangseinheit 11 erzeugten, nicht invertierten Spreizsequenz erhält man logische Nullen und Einsen, die für die Übertragung von Informationen verwendet werden können, zum Beispiel für absolute Zeitstempel. Dieser Datenstrom bzw. dieses Zeitsignal sind auch an einer externen Schnittstelle 45 verfügbar. Dabei ist es unerheblich, welche Synchronisationssequenz implementiert wird, da das Zeitsynchronisationssignal in allen Polarisationen codiert ist und sowohl die Zeitsynchronisation als auch die Polarisationssynchronisation gleichzeitig gestartet werden können. Dies ist ein großer Vorteil für Anwendungen, wie beispielsweise der QKD, die auf hochgenaue Zeit- und Polarisationsinformationen angewiesen sind.

### Bezugszeichenliste:

| | | | |
|---|---|---|---|
| 10 | Sendeeinheit | 36 | Modul 3 |
| 11 | Empfangseinheit | 37 | Strahlteiler |
| 12 | Leiterplatte | 38 | Halbwellenplatte |
| 13 | PIC | 39 | Strahlteiler |
| 14 | PIC | 40 | Strahlteiler |
| 15 | Laser | 41 | Viertelwellenplatte |
| 16 | Laser | 42 | Strahlteiler |
| 17 | Laser | 43 | FPGA |
| 18 | Laser | 44 | Frequenzgenerator |
| 19 | Wellenplatte | 45 | Schnittstelle |
| 20 | FPGA | 46 | Strahlteiler |
| 21 | Frequenzgenerator | 47 | Schnittstelle |
| 22 | Informationssignal | 48 | Treiberstrom |
| 23/53 | Strahlteiler | 49 | Steuersignale H/V |
| 24 | Synchronsignal | 50 | Steuersignale L/R |
| 25 | Strahlteiler | 51 | Steuersignale A/D |
| 26 | Strahlteiler | 52 | Fehlersignale |
| 27 | Transmitter | AES 1 | Analog-Elektrischer-Schaltkreis 1 |
| 28 | ausgehendes Signal | AES 2 | Analog-Elektrischer-Schaltkreis 2 |
| 29 | Receiver | AES 3 | Analog-Elektrischer-Schaltkreis 3 |
| 30 | eingehende Signal | D1 | Diode 1 |
| 31 | Polarisations-Manipulator | D2 | Diode 2 |
| 32 | DWDM | D3 | Diode 3 |
| 33 | Schnittstelle | D4 | Diode 4 |
| 34 | Modul 1 | D5 | Diode 5 |
| 35 | Modul 2 | D6 | Diode 6 |

## Patentansprüche

1. System zur Zeitsynchronisierung und Polarisationssynchronisierung von optischen Signalen, nämlich von Synchronsignalen (24) und Informationssignalen (22), zur Quantenkommunikation mit einer Sendeeinheit (10) und einer Empfangseinheit (11), wobei sich die Sendeeinheit (10) und die Empfangseinheit (11) vorzugsweise mit einer sich ändernden relativen Geschwindigkeit zueinander bewegen, und wobei die Sendeeinheit (10) mindestens zwei oder drei, vorzugsweise vier, Laser (15 - 18) aufweist, durch die polarisierte Synchronsignale (24), nämlich mindestens ein Zeitsynchronisationssignal und mindestens ein Polarisationssynchronisationssignal, mit mindestens zwei unterschiedlichen Frequenzanteilen erzeugbar sind und mit einem Transmitter (27) zum Senden der Synchronsignale (24) und wobei die einen Receiver (29) aufweisende Empfangseinheit (11) einen Polarisations-Manipulator (31) zur Polaristionsänderung der empfangenen Signale und mindestens drei Module, nämlich Modul 1 (34), Modul 2 (35) und Modul 3 (36), zur Messung einer Polarisation und einer Zeitbasis der empfangenen Synchronsignale (24) aufweist, und wobei zusammen mit den Synchronsignalen (24) ein externes Informationssignal (22) von der Sendeeinheit (10) versendbar und von der Empfängereinheit (11) empfangbar ist.

2. System nach Anspruch 1, **dadurch gekennzeichnet, dass** die mindestens zwei Laser (15, 16), vorzugsweise Laserdioden, nämlich Laser 1 (15) und Laser 2 (16), mit einem durch ein internes oder externes Zeitsignal getakteten Frequenzgenerator FG1 (21), insbesondere mit einem FPGA (20), verbunden sind, durch welchen die Laser (15, 16) mit einem insbesondere pseudo-zufälligen, spreizsequenz-modulierten und/oder amplitudenmodulierten Treiberstrom ansteuerbar sind, wobei die Laser (15, 16) insbesondere auf einem ersten photonischen integrierten Schaltkreis (PIC) (13), vorzugsweise auf einem InP-PIC, angeordnet sind und/oder dass die Sendeeinheit (10) zwei weitere Laser (17, 18), vorzugsweise Laserdioden, nämlich Laser 3 (17) und Laser 4 (18), die gleichermaßen ansteuerbar sind wie Laser 1 (15) und Laser 2 (16), aufweist und die insbesondere auf einem zweiten photonischen integrierten Schaltkreis (PIC) (14), vorzugsweise auf einem InP-PIC, angeordnet sind.

3. System nach Anspruch 2, **dadurch gekennzeichnet, dass** den Lasern (15, 18) ein elektrooptischer Modulator (EOM) zur Amplitudenmodulation nachgeordnet ist, wobei der EOM durch das pseudo-zufällige, spreizsequenz-modulierte Signal ansteuerbar ist und/oder dass den Lasern (15 - 18) jeweils eine Halb- oder Viertelwellenplatte (19) zugeordnet ist, so dass die durch die Laser (15 - 18) erzeugten, polarisierten Synchronsignale (24) verschiedenartig, nämlich vertikal, horizontal, diagonal, antidiagonal oder zirkular, polarasisierbar sind.

4. System nach einem der vorherigen Ansprüche, **dadurch gekennzeichnet, dass** den Lasern 1 (15) und 2 (16) ein Strahlteiler BS1 (25) und/oder den Lasern 3 (17) und 4 (18) ein Strahlteiler BS2 (26) zugeordnet sind, durch welche die Signale der Laser 1 (15) und 2 (16) zum Synchronsignal 1 und die Signale der Laser 3 (17) und 4 (18) zum Synchronsignal 2 zusammenführbar sind und die Synchronsignale 1 und 2 durch einen weiteren Strahlteiler BS3 (23) zusammenführbar sind und/oder dass zwischen dem Strahlteiler BS3 (23) und dem Transmitter (27) vorzugsweise ein weiterer Strahlteiler BS (53) angeordnet ist, durch den das Informationssignal (22) mit den Synchronsignalen (24) zusammenführbar ist.

5. System nach einem der vorherigen Ansprüche, **dadurch gekennzeichnet, dass** dem Receiver (29) der Empfangseinheit (11) der Polarisations-Manipulator (31) und vorzugsweise ein Signalseparator, vorzugsweise ein DWDM (32), durch welchen das Informationssignal (22) von den Synchronsignalen (24) trennbar sind, sowie die drei Module (34 - 36) zur Messung einer Polarisation und einer Zeitbasis, nachgeordnet sind.

6. System nach einem der vorherigen Ansprüche, **dadurch gekennzeichnet, dass** Modul 1 (34) zur Messung einer A/D-Signalkomponente einen Strahlteiler BS4 (37) zur Auskopplung eines Signalanteils, eine Halbwellenplatte (38) zur Rotation der A/D-Komponenten in die H/V-Polarisationsbasis und einen polarisierenden Strahlteiler PBS1 (39) zur Messung der horizontal/vertikal (H/V) Signalkomponenten aufweist und/oder dass Modul 2 (35) zur Messung einer R/L-Signalkomponente einen Strahlteiler BS5 (40) zur Auskopplung eines Signalanteils, eine Viertelwellenplatte (41) zur Rotation der rechtszirkular/links-zirkular (R/L)-Komponente in die horizontal/vertikal (HN) Polarisationsbasis und einen polarisierenden Strahlteiler PBS2 (46) zur Messung der horizontalen und vertikalen Signalkomponenten aufweist und/oder dass Modul 3 (36) zur Messung einer H/V-Signalkomponente einen polarisierenden Strahlteiler PBS3 (42) zur Messung der horizontal/vertikal (H/V) Signalkomponente aufweist.

7. System nach Anspruch 6, **dadurch gekennzeichnet, dass** den Strahlteilern PBS1 (39), PBS2 (46) und PBS3 (42) jeweils zwei Dioden, nämlich D1 und D2, D3 und D4, D5 und D6, zugeordnet sind, um die verschiedenen Basenanteile der A/D-Signale, R/L-Signale und H/V-Signale zu messen, wobei den Diodenpaaren jeweils ein Analog-Elektrischen-Schaltkreis, nämlich AES1, AES2 und AES3, zugeordnet ist, dem wiederum ein gemeinsamer Frequenzgenerator FQ2 (44), insbesondere ein FPGA (43), zugeordnet ist.

8. System nach Anspruch 7, **dadurch gekennzeichnet, dass** der Frequenzgenerator FQ2 (44) mit dem Polarisations-Modulator (31) verbunden ist, wobei der Frequenzgenerator FQ2 (44) aus den von AES1, AES2 und AES3 empfangenen Signalen, nämlich den A/D-Fehler-Signalen, R/L-Fehler-Signalen und H/V-Fehler-Signalen, Control-Signale erzeugt, vorzusgweise A/D-Control-Signale, R/L-Control-Signale und H/V-Control-Signale, die an den Polarisations-Modulator (31) zur Kompensation von Polarisationsänderungen übertragbar sind und/oder dass dem Frequenzgenerator FQ2 (44) ein Oszillator, vorzugsweise ein VCXO, vorgeschaltet ist, um mittels eines Signals eines Moduls eine Referenzsequenz zu erzeugen.

9. Verfahren zur Zeitsynchronisierung und Polarisationssynchronisierung von optischen Signalen, nämlich von Synchronsignalen (24) und Informationssignalen (22), zur Quantenkommunikation, insbesondere zur Verwendung des Systems gemäß Anspruch 1, mit einer Sendeeinheit (10) und einer Empfangseinheit (11), wobei sich die Sendeeinheit (10) und die Empfangseinheit (11) vorzugsweise mit einer sich ändernden relativen Geschwindigkeit zueinander bewegen und wobei die Sendeeinheit (10) mindestens zwei, drei, vorzugsweise vier, Laser (15 - 18) aufweist, durch welche polarisierte Synchronsignale, nämlich mindestens ein Zeitsynchronisationssignal und mindestens ein Polarisationssynchronisationssignal, mit mindestens zwei unterschiedlichen Frequenzanteilen erzeugt werden und mit einem Transmitter (27) zum Senden der Synchronsignale (22) und wobei die einen Receiver (29) aufweisende Empfangseinheit (11) einen Polarisations-Manipulator (31) zur Polarisationsänderung der empfangenen Signale und mindestens drei Module, nämlich Modul 1 (34), Modul 2 (35) und Modul 3 (36), zur Messung einer Polarisation und einer Zeitbasis der empfangenen Synchronsignale aufweist und wobei zusammen mit den Synchronsignalen (22) ein externes Informationssignal (24) von der Sendeeinheit (10) versendet und von der Empfängereinheit (11) empfangen wird.

10. Verfahren nach Anspruch 9, **dadurch gekennzeichnet, dass** die mindestens zwei Laser (15, 16), nämlich Laser 1 (15) und Laser 2 (16), von einem durch ein internes oder externes Zeitsignal getakteten Frequenzgenerator FG1 (21) mit einem pseudo-zufälligen, spreizsequenz-modulierten und/oder amplitudenmodulierten Treiberstrom angesteuert werden und/oder dass die Sendeeinheit (10) zwei weitere Laser, nämlich Laser 3 (17) und Laser 4 (18), aufweist, die gleichermaßen angesteuert werden wie Laser 1 (15) und Laser 2 (16).

11. Verfahren nach Anspruch 9 oder 10, **dadurch gekennzeichnet, dass** den Lasern (15 - 18) ein elektrooptischer Modulator (EOM) zur Amplitudenmodulation nachgeordnet ist, wobei der EOM durch das pseudo-zufällige, spreizsequenz-modulierte Signal angesteuert wird und/oder dass den Lasern (15 - 18) jeweils eine Halb- oder Viertelwellenplatte (19) zugeordnet ist, so dass durch die Laser (15 - 18) polarisierte Synchronsignale (24) erzeugt werden, die verschiedenartig polarasisierbar sind, nämlich vertikal, horizontal, diagonal, antidiagonal oder links oder rechts zirkular.

12. Verfahren nach einem der Ansprüche 9 bis 11, **dadurch gekennzeichnet, dass** den Lasern 1 (15) und 2 (16) ein Strahlenteiler BS1 (25) und/oder den Lasern 3 (17) und 4 (18) ein Strahlenteiler BS2 (26) zugeordnet ist, durch welchen die Signale der Laser 1 (15) und 2 (16) zum Synchronsignal 1 und die Signale der Laser 3 (17) und 4 (18) zum Synchronsignal 2 zusammengeführt werden und die Synchronsignale 1 und 2 durch einen weiteren Strahlteiler BS3 (23) zusammengeführt werden und/oder dass zwischen dem Strahlteiler BS3 (23) und dem Transmitter (27) vorzugsweise ein weiterer Strahlenteil BS (53) angeordnet ist, durch den das Informationssignal (22) mit den Synchronsignalen (24) zusammengeführt wird.

13. Verfahren nach einem der Ansprüche 9 bis 12, **dadurch gekennzeichnet, dass** das Informationssignal (22) mit den Synchronsignalen (24) von dem Receiver (29) empfangen werden und durch den Polarisations-Manipulator (31) und vorzugsweise einen Signalseparator (DWDM, 32) sowie durch die drei Module (34 - 36) zur Messung einer Polarisation und einer Zeitbasis geleitet werden.

14. Verfahren nach einem der Ansprüche 9 bis 13, **dadurch gekennzeichnet, dass** durch Modul 1 (34) eine Rotation der (A/D)-Komponenten in die horizontal/vertikal (H/V)-Polarisationsbasis zur Messung der horizontalen und vertikalen Signalkomponenten erfolgt und/oder dass durch Modul 2 (35) eine Rotation der (R/L)-Komponenten in die horizontal/vertikal (H/V)-Polarisationsbasis zur Messung der horizontalen und vertikalen Signalkomponenten erfolgt und/oder dass durch Modul 3 (36) eine horizontal/vertikal (H/V)-Polarisationsbasis aus den Synchronsignalen (24) ausgekoppelt und gemessen wird.

15. Verfahren nach Anspruch 14, **dadurch gekennzeichnet, dass** aus den jeweiligen Basen A/D-Signale, R/L-Signale und H/V-Signale und vorzugsweise Control-Signale erzeugt werden, die jeweils einem Analog-Elektrischen-Schaltkreis, nämlich AES1, AES2 und AES3, zugeführt werden, die wiederum A/D-Fehler-Signale, R/L-Fehler-Signale und H/V-Fehler-Signale an einen gemeinsamen Frequenzgenerator FQ2 (44) übertragen.

16. Verfahren nach Anspruch 15, **dadurch gekennzeichnet, dass** der Frequenzgenerator FQ2 (44) mit dem Polarisations-Manipulator (31) verbunden ist, wobei durch den Frequenzgenerator FQ2 (44) A/D-Control-Signale, R/L-Control-Signale und H/V-Control-Signale erzeugt werden, die an den Polarisations-Manipulator (31) zur Kompensation von Polarisationsänderungen der Synchronsignale (224) und Informationssignale (22) übertragen werden.

17. Verfahren nach einem der Ansprüche 9 bis 16, **dadurch gekennzeichnet, dass** die A/D-Signale, R/L-Signale und/oder H/V-Signale demoduliert und in einer Korrelationsmessung mit einer Referenzfrequenz verglichen werden und/oder mittels eines Fehlersignals der Korrelationsmessung ein Oszillator, vorzugsweise einen VCXO, angesteuert wird, um eine Referenzfrequenz für den Frequenzgenerator FQ2 zu steuern.
